Europäisches Patentamt

European Patent Office

Office européen des brevets

(11) Veröffentlichungsnummer: **0 246 677**

**A1**

# (12) EUROPÄISCHE PATENTANMELDUNG

(21) Anmeldenummer: 87200626.7

(22) Anmeldetag: 03.04.87

(51) Int. Cl.⁴: **C01B 17/90** , C22B 43/00 , C22B 3/00 , C02F 1/70

(30) Priorität: **17.05.86 DE 3616792**

(43) Veröffentlichungstag der Anmeldung:
**25.11.87 Patentblatt 87/48**

(84) Benannte Vertragsstaaten:
**BE DE ES SE**

(71) Anmelder: **NORDDEUTSCHE AFFINERIE AG**
**Alsterterrasse 2**
**D-2000 Hamburg 36(DE)**

(72) Erfinder: **Winkler, Hermann, Dr.**
**Jahnstrasse 28 d**
**D-2105 Seevetal 3(DE)**
Erfinder: **Reppenhagen, Claus**
**Kastanienweg 24**
**D-2153 Neu-Wulmstorf(DE)**

(74) Vertreter: **Rieger, Harald, Dr.**
**Reuterweg 14**
**D-6000 Frankfurt am Main(DE)**

(54) Verfahren zur Entfernung von Quecksilber aus arsenhaltiger Abfallschwefelsäure.

(57) Bei einem Verfahren zur Entfernung von Quecksilber aus Schwefelsäure durch Behandlung mit zerteiltem metallischem Kupfer, wird zwecks praktisch vollständiger Entfernung des Quecksilbers aus Abfallschwefelsäure diese mit dendritischem Kupferpulver einer Fülldichte von etwa 0,9 bis etwa 2,0 g/cm³ behandelt und das quecksilberhaltige Zementat abgetrennt.
Die Behandlung wird bei einer Temperatur von 30 bis 85°C vorgenommen.

EP 0 246 677 A1

## Verfahren zur Entfernung von Quecksilber aus arsenhaltiger Abfallschwefelsäure

Die Erfindung betrifft ein Verfahren zur Entfernung von Quecksilber aus arsenhaltiger Abfallschwefelsäure durch Behandlung mit zerteiltem metallischem Kupfer.

Bei der Verhüttung sulfidischer Kupfer-Konzentrate, die Quecksilber enthalten, gelangt zusammen mit dem heißen $SO_2$-haltigen Ofengas praktisch das gesamte im Erz enthaltene Quecksilber in die Wasch-und Kühlanlage. Nach dem Verlassen des Ofens reagiert nämlich das als Metalldampf vorliegende Quecksilber teilweise mit anderen Beimengungen des Gases, z.B. met Selen, zu Quecksilberselenid oder mit Schwefeldioxid und Sauerstoff zu Quecksilbersulfat. Bei der Kontaktierung des Gases mit der Waschlösung des Kühlturmes oxidieren gelöste Kupfer-II-ionen weiteres vorhandenes metallisches Quecksilber. Die genannten Oxidationsvorgänge führen, von der Quecksilberselenid-Bildung abgesehen, zu einer Anreicherung des Quecksilbers als gelöste Quecksilber-II-Verbindung in der Waschsäure. Da diese Verunreinigte Säure überwiegend ein Abfallprodukt bzw. Abfallschwefelsäure darstellt, kann sie prinzipiell durch Neutralisation oder thermische Spaltung beseitigt werden. Das in der Säure gelöste Quecksilber würde jedoch dann zu Abwasserproblemen führen bzw. nach der Spaltung wieder als Metalldampf in die Kontaktanlage gelangen und somit im Kreislauf verbleiben. Eine Behandlung der arsenhaltigen Abfallschwefelsäure bzw. Zementation mit unedlen Metallen, wie Zinkstaub, ist wegen des Arsengehaltes der Säure und der damit verbundenen Arsenwasserstoffbildung nicht zweckmäßig. Auch die aus der analytischen Chemie bekannte Amalgamierung auf Kupferblech und Draht ist in der technischen Praxis nicht quantitativ, da sich die Oberfläche - schnell mit Quecksilber überzieht und für eine weitere Reaktion nicht mehr zur Verfügung steht.

Aus "Chem. Abstr." Vol. 96, Ref. 37 733 z ist eine Studie des Reaktionsmechanismus zur Entfernung von Quecksilber aus Schwefelsäure durch Zusatz von zerteiltem Silber oder Kupfer und Amalgamierung dieser Metale bekannt. Hinweise für die technische Praxis werden nicht gegeben.

Der Erfindung liegt die Aufgabe zugrunde, ein einfach durchzuführendes und wirtschaftliches Verfahren zur Entfernung von Quecksilber aus arsenhaltiger Abfallschwefelsäure bereitzustellen. Die Erfindung löst diese Aufgabe mit einem Verfahren zur Entfernung von Quecksilber aus Schwefelsäure durch Behandlung mit zerteiltem metallischem Kupfer. Ein Verfahren der genannten Art wird gemäß der Erfindung in der Weise ausgestaltet, daß Abfallschwefelsäure mit dendritischem Kupferpulver einer Fülldichte von etwa 0,90 bis etwa 2,00 g/cm³ behandelt und das quecksilberhaltige Zementat abgetrennt wird.

Es wurde gefunden, daß nur dendritisches Kupferpulver für technische Verfahren geeignet ist, und daß Kupferpulver des kugeligen oder spratzigen Typs nur eine sehr geringe Wirkung und keine technische Brauchbarkeit besitzen. Es wurde des weiteren gefunden, daß das dendritische Kupfer ein bestimmtes Schüttgewicht aufweisen muß. Während dendritische Kupferpulver mit Schüttgewichten unter 2,50 und bis 2,30 g/cm³ eine noch geringe Reaktionsgeschwindigkeit besitzen, ist bei dendritischen Kupferpulvern mit Schüttgewichten von 0,95 bis 2,15 g/cm³ eine hohe Reaktionsgeschwindigkeit bei der Behandlung der arsenhaltigen Abfallschwefelsäure und eine quantitative Ausfüllung des Quecksilbers gewährleistet. Als besonders geeignet haben sich dendritische Kupferpulver mit Schüttgewichten von 0,95 bis 1,10 g/cm³ erwiesen. Für eine quantitative Ausfällung des Quecksilbers benötigt das letztgenannte Kupferpulver beispielsweise nur etwa den zehnten Teil der Reaktionszeit eines dendritischen Kupferpulvers mit einem Schüttgewicht von 1,75 bis 2,15 g/cm³.

Zweckmäßig wird die Behandlung der arsenhaltigen Abfallschwefelsäure, die einen Schwefelsäuregehalt von üblicherweise 12 bis 50 % besitzt, bei mäßig erhöhter Temperatur durchgeführt, während bei Raumtemperatur lange Behandlungszeiten in Kauf genommen werden müssen. Zwar können diese durch intensives Rühren in gewissem Umfang verringert werden, jedoch ist es von Vorteil, die Behandlung bei Temperaturen von 30 bis 85°C vorzunehmen. Mit einer schnellen Ausfällung bei Temperaturen von etwa 80°C ist auch ein geringerer Verbrauch an Kupferpulver verbunden.

Zur Durchführung des erfindungsgemäßen Verfahrens wird die Quecksilber und Arsen sowie Flugstaub enthaltende Abfallschwefelsäure in einen Behälter mit einem schnellaufenden Rührwerk eingeleitet. Die zweckmäßig auf etwa 80°C erhitzte Abfallschwefelsäure (ca. 740 g $H_2SO_4$/l, ca. 15 g As/l) wird mit ca. 2 g/l dendritischem Kupferpulver einer Schüttdichte von 0,95 bis 1,10 g/cm³ versetzt und lebhaft gerührt. Nach ca. 20 min Reaktionszeit ist das Quecksilber praktisch quantitativ ausgefällt. Der in der feststoffhaltigen (Flugstaub) Abfallschwefelsäure anfallende Rückstand des Zementats wird abfiltriert und nach an sich bekannten Methoden auf Quecksilber aufgearbeitet.

Das erfindungsgemäße Verfahren weist eine Reihe von Vorteilen auf. Aufgrund der Stellung des Kupfers in der elektrochemischen Spannungsreihe wird die Bildung von toxischem Arsenwasserstoff während der Säurebehandlung vermieden. Die Reaktion ist in einem Rührbehälter ohne vorhergehende Filtration der Abfallschwefelsäure einfach durchzuführen. Des weiteren besitzt die Reaktionsflüssigkeit eine gute Filtrierbarkeit, da auch der suspendierte Feststoff, wie schlecht filtrierbarer Flugstaub, zusammen mit dem körnigen Zementatrückstand abgetrennt wird. Schließlich ist die Behandlung auch in quecksilberhaltigen Schwefelsäuren durchführbar, die Halogen-und Kupfer $^{2+}$-Ionen enthalten.

Die Erfindung wird anhand der nachstehenden Beispiele näher und beispielshaft erläutert.

Beispiel 1

In diesem Beispiel wird die Abhängigkeit der Reaktionsgeschwindigkeit der Quecksilberfällung von der Schüttdichte des dendritischen Kupferpulvers veranschaulicht.

In 3 Rührbehältern wurden jeweils 1,5 l einer Abfallschwefelsäure, enthaltend 23,5 mg Hg/l, 16,75 g Cl$^{-}$/1, 650 g H$_2$SO$_4$/l, 12 g As/l, 3,85 g Cu/l und 0,5 g/l Flugstaub, eingegeben und die Säure auf 80°C aufgeheizt. Sodann wurden unter lebhaftem Rühren jeweils 4,5 g dendritisches Kupferpulver verschiedener Schüttdichte in die Rührbehälter eingegeben und die Quecksilberkonzentration (mg/l) in der Abfallschwefelsäure in Abhängigkeit von der Reaktionszeit (min) ermittelt. In der nachstehenden Tabelle 1 sind die Ergebnisse aufgeführt.

T a b e l l e   1

| Dichte des Cu-Pulvers 0,95-1,10 g/cm$^3$ | | Dichte des Cu-Pulvers 1,75-2,15 g/cm$^3$ | | Dichte des Cu-Pulvers 2,3-2,5 g/cm$^3$ | |
|---|---|---|---|---|---|
| Reaktionszeit (min) | Hg (mg/l) | Reaktionszeit (min) | Hg (mg/l) | Reaktionszeit (min) | Hg (mg/l) |
| 0 | 23,5 | 0 | 23,5 | 0 | 23,5 |
| 10 | 4,4 | 10 | 12,1 | 10 | 17,8 |
| 30 | 0,08 | 30 | 8,8 | 30 | 17,8 |
| 60 | 0,04 | 60 | 5,3 | 60 | 16,8 |
| 120 | 0,03 | 120 | 0,9 | 120 | 15,8 |
| 180 | 0,02 | 180 | 0,1 | 180 | 15,8 |

Es zeigte sich, daß in ca. 60 min die Ausfällung des Quecksilbers im wesentlichen beendet ist, wenn dendritisches Kupferpulver einer Schüttdichte von 0,95 bis 1,10 g/cm³ verwendet wird. Bei Verwendung von Kupferpulver einer Schüttdichte von 1,75 bis 2,15 g/cm³ liegt zum gleichen Zeitpunkt noch etwa die 125-fache Menge Quecksilber in der Säure vor.

Beispiel 2

In diesem Beispiel wird die Abhängigkeit der Reaktionsgeschwindigkeit der Quecksilberfällung von der Temperatur der Abfallschwefelsäure veranschaulicht. In der in Beispiel 1 beschriebenen Weise wurden drei Rührbehälter mit jeweils 1,5 l Abfallschwefelsäure der Zusammensetzung wie in Beispiel 1 gefüllt. In die auf 20, 50 und 80°C temperierten Säuren wurden jeweils 4,5 g dendritisches Kupferpulver mit der Schüttdichte 1,95 bis 1,10 g/cm³ unter lebhaftem Rühren eingegeben. In der Abfallschwefelsäure wurde die Quecksilberkonzentration in Abhängigkeit von der Reaktionszeit bestimmt. In der nachstehenden Tabelle 2 sind die Ergebnisse aufgeführt.

Tabelle 2

| 20°C | | 50°C | | 80°C | |
|------|------|------|------|------|------|
| Reaktionszeit (min) | Hg (mg/l) | Reaktionszeit (min) | Hg (mg/l) | Reaktionszeit (min) | Hg (mg/l) |
| 0 | 27,5 | 0 | 27,5 | 0 | 27,5 |
| 10 | 18,3 | 10 | 14,6 | 10 | 4,9 |
| 20 | 17,8 | 20 | 13,2 | 20 | 0,2 |
| 45 | 17,5 | 45 | 11,9 | 45 | 0,05 |
| 60 | 17,2 | 60 | 10,2 | 60 | 0,04 |
| 120 | 15,4 | 120 | 7,0 | 120 | 0,03 |
| 180 | 14,9 | 180 | 5,4 | 180 | 0,02 |

Es zeigte sich, daß bei Verwendung eines dendritischen Kupferpulvers einer Schüttdichte von 0,95 bis 1,10 g/cm³ sowie bei einer Säuretemperatur von 80°C die Quecksilberfällung nach 60 min praktisch beendet ist.

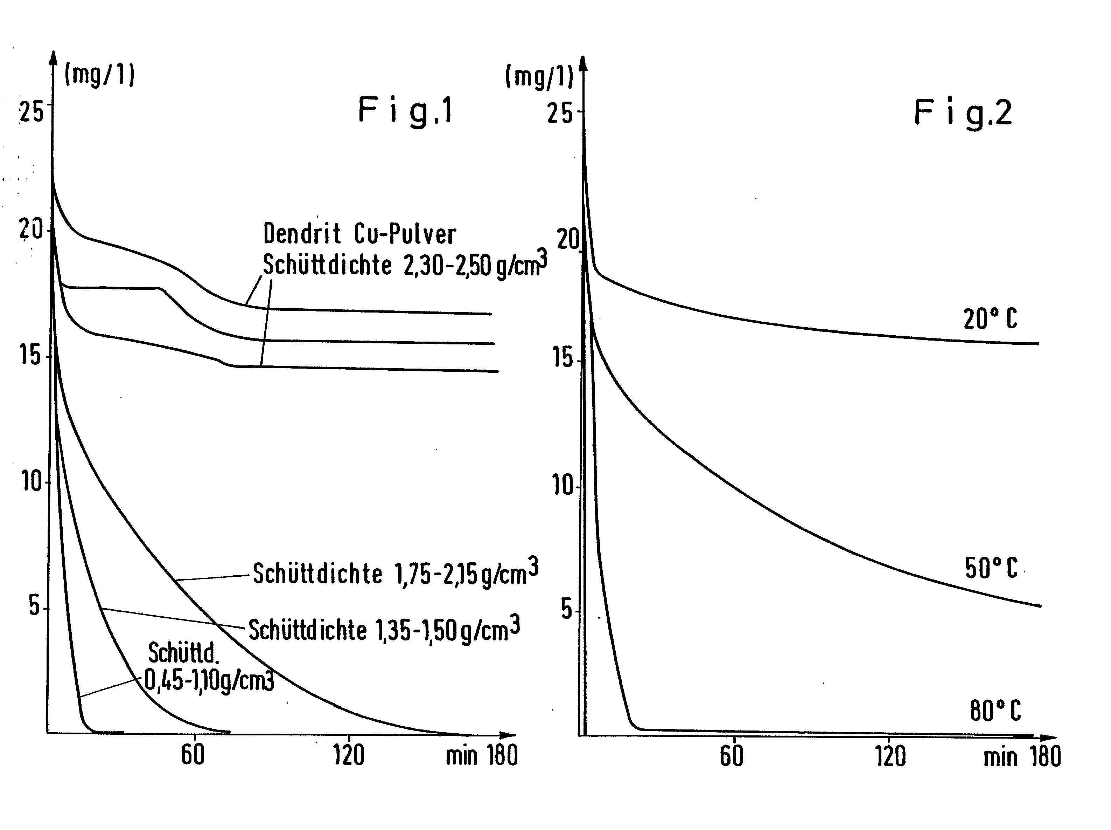

In den Figuren 1 und 2 sind die Ergebnisse der Beispiele 1 resp. 2 in Diagrammen veranschaulicht.

**Ansprüche**

1. Verfahren zur Entfernung von Quecksilber aus Schwefelsäure durch Behandlung mit zerteiltem metallischem Kupfer, dadurch gekennzeichnet,
daß Abfallschwefelsäure mit dendritischem Kupferpulver einer Fülldichte von etwa 0,9 bis etwa 2,0 g/cm³ behandelt und das quecksilberhaltige Zementat abgetrennt wird.

2. Verfahren nach Anspruch 1, dadurch gekennzeichnet, daß die Behandlung bei einer Temperatur von 30 bis 85°C vorgenommen wird.

Fig.1

(mg/1)

Dendrit Cu-Pulver
Schüttdichte 2,30-2,50 g/cm³

Schüttdichte 1,75-2,15 g/cm³

Schüttdichte 1,35-1,50 g/cm³

Schüttd.
0,45-1,10g/cm3

Fig.2

(mg/1)

20° C

50° C

80° C

0 246 677

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CHEMICAL ABSTRACTS, Band 92, Nr. 22, Juni 1980, Seite 107, Zusammenfassung Nr. 183076w, Columbus, Ohio, US; & JP-A-79 133 497 (MITSUI MINING AND SMELTING CO., LTD) 17-10-1979<br><br>--- | | C 01 B  17/90<br>C 22 B  43/00<br>C 22 B   3/00<br>C 02 F   1/70 |
| A,D | CHEMICAL ABSTRACTS, Band 96, Nr. 6, Februar 1982, Seite 153, Zusammenfassung Nr. 37733z, Columbus, Ohio, US; T. NAKAMURA et al.: "Removal of mercury in sulfuric acid by the addition of copper and silver", & RYUSAN TO KOGYO 1981, 34(10), 197-295<br><br>----- | | |
| | | | RECHERCHIERTE SACHGEBIETE (Int. Cl.4) |
| | | | C 01 B<br>C 22 B<br>C 02 F |

Der vorliegende Recherchenbericht wurde für alle Patentansprüche erstellt.

| Recherchenort | Abschlußdatum der Recherche | Prüfer |
|---|---|---|
| DEN HAAG | 10-06-1987 | VAN BELLINGEN I.C.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82